# EUROPÄISCHE PATENTSCHRIFT

(11) **EP 2 789 782 B1**
(45) Veröffentlichungstag und Bekanntmachung des Hinweises auf die Patenterteilung: **03.02.2016**
(21) Anmeldenummer: 14163959.1
(22) Anmeldetag: 09.04.2014
(51) Int. Cl.: E05F 5/02, F16F 9/48

(54) **Vorrichtung zur Bewegungsdämpfung eines bewegbaren Möbelteils**
Device for damping the movement of a movable part of a piece of furniture
Dispositif destiné à amortir le mouvement d'un élément de meuble mobile

(30) Priorität: 10.04.2013 DE 202013003332 U
(43) Veröffentlichungstag der Anmeldung: 15.10.2014
(73) Patentinhaber: Grass GmbH, 6973 Höchst (AT)
(72) Erfinder: Erdel, Tobias, 71069 Sindelfingen (DE)
(74) Vertreter: Otten, Roth, Dobler & Partner mbB Patentanwälte

(56) Entgegenhaltungen:
- DE-U1- 20 210 295
- US-A1- 2002 010 977
- US-A1- 2009 223 759

## Beschreibung

### Stand der Technik

Vorrichtungen zur Bewegungsdämpfung eines an einem Möbelkorpus über Führungsmittel wie beispielsweise Auszüge oder Scharniere bewegbar aufgenommenen Möbelteils sind bekannt. Hierzu zählen Fluiddämpfer mit einem Gehäuse, das ein Innenvolumen bereitstellt, in dem Kolbenmittel mit einer daran angreifenden und aus dem Gehäuse herausreichenden Kolbenverlängerung verschiebbar sind. Über die Verlängerung ist das bewegbare Möbelteil für die Bewegungsdämpfung mit den Kolbenmitteln koppelbar, wobei ein Fluid wie z. B. Luft oder Öl im Innenvolumen einen Widerstand gegen eine Kolbenmittelverschiebung, die insbesondere aufgrund der Bewegungskopplung mit dem gekoppelten Möbelteil erfolgt, bei der Bewegungsdämpfung bereitstellt. Dabei werden die Kolbenmittel abgebremst durch das von den Kolbenmitteln im Innenvolumen zu verdrängende Fluid, so dass eine Bewegung der Kolbenmittel nur gemäß der Menge des Fluids möglich ist, welche von den Kolbenmitteln bei deren Bewegung verdrängt wird.

Aus der US 2009/0223759 A1 ist ein Fluid-Dämpfer für eine Schublade bekannt, der ein stirnseitig offenes hohles Gehäuse mit unterschiedlichen Abschnitten aufweist.

### Aufgabe und Vorteile der Erfindung

Aufgabe der vorliegenden Erfindung ist es, eine konstruktiv einfache Vorrichtung zur Bewegungsdämpfung eines Möbelteils bereitzustellen, deren Dämpfungscharakteristik verbessert ist bzw. entsprechend verbesserte Führungsmittel für ein Möbelteil zu erhalten.

Diese Aufgabe wird durch die unabhängigen Ansprüche gelöst.

Die abhängigen Ansprüche betreffen vorteilhafte und zweckmäßige Weiterbildungen der Erfindung.

Die Erfindung geht aus von einer Vorrichtung zur Bewegungsdämpfung eines relativ zu einem Möbelkorpus bewegbaren Möbelteils, umfassend ein Gehäuse, das einen mit einem Fluid beaufschlagten Verschieberaum umschließt, in welchem mit dem Möbelteil koppelbare Kolbenmittel verschieblich geführt sind, wobei die Bewegungsdämpfung des Möbelteils mit einer Verschiebebewegung der Kolbenmittel in eine erste Schieberichtung relativ zum Gehäuse erfolgt und dabei ein Teil des Fluids über einen Spaltbereich zwischen den Kolbenmitteln und Innenwandungsabschnitten des Gehäuses von einem ersten Teilvolumen des Verschieberaums in ein zweites Teilvolumen des Verschieberaums strömt, wobei die Aufteilung des Verschieberaums in die beiden Teilvolumina durch die Verschiebeposition der Kolbenmittel bestimmt ist. Dabei sind eine Vielzahl von Verschiebepositionen der Kolbenmittel innerhalb des durch den Verschieberaum bereitgestellten Verschiebeweges bzw. über einen maximalen Verschiebeweg für die Hin- und Herbewegung der Kolbenmittel möglich.

In einem Bereich des Verschieberaums, in welchem sich die Kolbenmittel an den Innenwandungsabschnitten des Gehäuses vorbeibewegen, sind die Innenwandungsabschnitte derart ausgebildet, dass die vom Fluid durchströmbare Gesamtquerschnittsfläche des Spaltbereichs zwischen den Innenwandungsabschnitten des Gehäuses und den Kolbenmitteln in einem betrachteten Querschnitt abhängig von der Verschiebeposition der Kolbenmittel im Verschieberaum veränderlich ist. Dabei bildet die Querschnittsfläche des Spaltbereichs in einem betrachteten Querschnitt entlang der Verschiebrichtung der Kolbenmittel eine Durchtrittsfläche für das Fluid zwischen den beiden Teilvolumina. Damit wird vorteilhaft eine über die gesamte Dämpfungsstrecke veränderliche Dämpfcharakteristik erreicht. Denn die Größe des Spalts bzw. die Durchtrittsfläche für das Fluid im Spaltbereich bestimmt die Menge des durchströmenden Fluids und damit, wie stark bzw. mit welchem Verlauf die Abbremsung bzw. Dämpfung der Kolbenmittel und damit des bewegbaren Möbelteils erfolgt. Bislang ist bei bekannten zum Beispiel in der Grundform mit einem hohlzylindrischen Gehäuseinneren der Dämpfvorrichtung eine über die Verschiebstrecke der Kolbenmittel gleiche Spaltfläche bzw. ein gleicher Innendurchmesser der Innenwandung des Verschieberaums realisiert, was zu jedem Zeitpunkt des Dämpfvorgangs bzw. an jeder Verschiebeposition der Kolbenmittel im Verschieberaum die gleiche Dämpfkraft aufgrund des Durchströmens des verdrängten Fluids im Spaltbereich bedeutet. Nachteilig daran ist, dass bei einem Dämpfvorgang die Dämpfkraft über den Dämpfweg bzw. den gesamten Verschiebeweg der Kolbenmittel bei gleichzeitig stattfindender Verringerung der Verschiebegeschwindigkeit der Kolbenmittel die Dämpfkraft gleichbleibt bzw. für einen gewünschten Dämpfvorgang anfangs zu hoch und/oder später zu niedrig ist. Davon wiederum abhängig ist die Schließzeit des bewegbaren Möbelteils vom Beginn des Dämpfvorgangs an bis zum Schließzustand. Dabei kann die gesamte wirkende Masse aufgrund der Beladung des Möbelteils, z. B. einer Schublade, stark variieren, was unerwünscht ist. Mit der erfindungsgemäßen Vorrichtung bleibt die Schließzeit des Möbelteils unabhängig von dessen Masse bzw. Beladung zumindest nahezu gleich.

Das in Bewegungsrichtung der Kolbenmittel im Verschieberaum vor den Kolbenmitteln vorhandene Fluid wird beim Verschieben der Kolbenmittel demgemäß zwischen den Kolbenmitteln und den radial außen über den Spaltbereich benachbarten Wandungsabschnitten an den Kolbenmitteln vorbei verdrängt bzw. strömt über den Spaltbereich in den in Verschieberichtung hinter den Kolbenmitteln liegenden Volumenbereich des Verschieberaums.

Insbesondere wird vorteilhafterweise im Verlauf des Schließvorgangs des Möbelteils wenn die Kolbenmittel verschoben werden, ein mit der Querschnittsfläche gebildeter Ringspalt zunehmend verkleinert. Damit kann über die Dämpfungsdauer, in welcher der Dämpfer wirkt, immer weniger Fluid durch den Spalt strömen, was dazu führt, dass über den Dämpfverlauf eine gegen die Bewegung des Möbelteils wirkende Dämpfungskraft sich erhöht.

Dabei geht bei einem Ringspalt, der zum Beispiel eine kreisringförmige Fläche aufweist, die sich verkleinert, wenn sich die Kolbenmittel beim Dämpfvorgang in Verschieberichtung bewegen, der Durchmesser in der Formel für die Fläche des Ringspalts quadratisch ein, so dass sich eine Dämpfungskurve in einem Kraft-Weg-Diagramm mit einer progressiven Kennlinie darstellt, also die Dämpfkraft zunächst mit vergleichsweise geringer Steigung sich erhöht und dann stark ansteigt, was vorteilhaft ist.

Somit lässt sich vorteilhaft erreichen, dass eine Dämpfwirkung selbst bei gegen Ende des Dämpfvorgangs abnehmender Geschwindigkeit des Möbelteils und damit der Kolbenmittel wenigstens nahezu konstant bleibt. Damit ist bei kleineren sowie größeren abzudämpfenden Massen, abhängig von dem mit dem Möbelteil zu bewegenden Gesamtgewicht und bei unterschiedlichen Geschwindigkeiten des Möbelteils während des Dämpfvorgangs die gleiche Dämpfcharakteristik bereitgestellt. Vorteilhafterweise ist somit eine Schließzeit des bewegbaren Möbelteils vergleichsweise konstant, egal ob eine starke oder geringe Beladung vorliegt. Dies wird vom Nutzer als angenehm empfunden.

Vorteilhafterweise sind in einem Bereich des Verschieberaums, in welchem sich die Kolbenmittel an den Innenwandungsabschnitten des Gehäuses vorbeibewegen, die Innenwandungsabschnitte in die erste Verschieberichtung der Kolbenmittel sich verjüngend ausgebildet. Die Art bzw. der Verlauf der Verjüngung kann je nach Ausgestaltung der Innenwandungsabschnitte unterschiedlich sein. Damit wird erreicht, dass sich der freie Spaltquerschnitt zwischen der in ihrer Form gleichbleibenden Außenkontur der Kolbenmittel und den Innenwandungsabschnitten in Einschubrichtung bzw. in die erste Schieberichtung verringert, gemäß der betreffenden verjüngend ausgebildeten Innenwandungsabschnitte.

Der Kern der Erfindung liegt darin, dass in einem Bereich des Verschieberaums, in welchem sich die Kolbenmittel an den Innenwandungsabschnitten des Gehäuses vorbeibewegen, die Innenwandungsabschnitte unterschiedliche Bereiche umfassen, die in Schieberichtung der Kolbenmittel unterschiedlich stark verjüngend ausgebildet sind. Damit lässt sich die Dämpfcharakteristik der Dämpfvorrichtung individuell ausbilden, zum Beispiel zum Anfang der Einwärts- bzw. Dämpfbewegung der Kolbenmittel weniger stark ausgeprägt und später zum Ende der Einwärts- bzw. Dämpfbewegung der Kolbenmittel stärker ansteigend.

Außerdem ist es vorteilhaft, dass in einem Bereich des Verschieberaums, in welchem sich die Kolbenmittel an den Innenwandungsabschnitten des Gehäuses vorbeibewegen, die Innenwandungsabschnitte in die erste Verschieberichtung sich gleichmäßig verjüngend ausgebildet sind. Insbesondere weist der sich verjüngende Abschnitt eine gleichbleibende Verjüngung über seine Erstreckung auf. Es ist auch möglich, dass sich die Innenwandungsabschnitte in die erste Bewegungsrichtung der Kolbenmittel abschnittsweise unterschiedlich verjüngen. Die Verjüngung ist bevorzugt stufenlos bzw. gleichmäßig ausgebildet, es ist aber auch eine nicht stufenlose z. B. absatzförmige, stufige und/oder unregelmäßige Verjüngung denkbar.

Es ist überdies vorteilhaft, dass in einem Bereich des Verschieberaums, in welchem sich die Kolbenmittel an den Innenwandungsabschnitten des Gehäuses vorbeibewegen, die Innenwandungsabschnitte in die erste Schieberichtung im Wesentlich schräg ausgerichtet ausgebildet sind.

Weiter wird gemäß einer vorteilhaften Ausführungsform des Erfindungsgegenstandes vorgeschlagen, dass in einem Bereich des Verschieberaums, in welchem sich die Kolbenmittel an den Innenwandungsabschnitten des Gehäuses vorbeibewegen, die Innenwandungsabschnitte in die erste Schieberichtung der Kolbenmittel im Wesentlich konisch verjüngend ausgebildet sind. Insbesondere sind die Innenwandungsabschnitte in die erste Schieberichtung der Kolbenmittel kegelstumpfförmig sich verjüngend ausgestaltet. Die Kolbenmittel sind außen insbesondere zylindrisch bzw. umfänglich kreisförmig gestaltet.

Weiter ist es vorteilhaft, dass in einem Bereich des Verschieberaums, in welchem sich die Kolbenmittel an den Innenwandungsabschnitten des Gehäuses vorbeibewegen, die Innenwandungsabschnitte in Schieberichtung der Kolbenmittel vor und/oder nach den sich verjüngenden Innenwandungsabschnitten einen Bereich aufweisen, der in seiner Form unveränderlich ausgebildet ist. Insbesondere ist die unveränderliche Form hohlzylindrisch.

Es ist weiter von Vorteil, dass in einem ersten Bereich des Verschieberaums, in welchem sich die Kolbenmittel an den Innenwandungsabschnitten des Gehäuses vorbeibewegen, die Innenwandungsabschnitte in die erste Schieberichtung der Kolbenmittel im Längsschnitt des Gehäuses im Wesentlichen konisch verjüngend ausgebildet sind, wobei sich in die erste Schieberichtung ein Endbereich des Verschieberaums anschließt, in welchem sich die Kolbenmittel vor Erreichen einer Endstellung entlangbewegen, wobei ein Innendurchmesser des Endbereichs im Vergleich zum geringsten Innendurchmesser des ersten Bereichs derart vergrößert ist, dass im Endbereich nahezu keine relevante Dämpfwirkung auf die sich in die erste Schieberichtung verschiebenden Kolbenmittel wirkt. Auf diese Weise können Schließfehler des zu dämpfenden Möbelteils vermieden werden. Insbesondere wird mit dem Endbereich den Kolbenmitteln ein Freilauf bereitgestellt, so dass das zu dämpfende Möbelteil wie z. B. eine Schublade eine gewünschte Schließposition sicher erreichen kann. Insbesondere können Schließfehler durch nicht vollständig geschlossene Möbelteile aufgrund zu starker Dämpfung auf der letzten Teilstrecke des Schließwegs vor dem Erreichen einer Schließanschlagstellung relativ zum Möbelkorpus vermieden werden.

Gemäß einer vorteilhaften Modifikation der Erfindung ist eine als ein Bauteil ausgebildete Dämpfereinheit zur Bewegungsdämpfung der relativ zueinander bewegbaren Möbelteile vorhanden. Die Dämpfereinheit kann insbesondere standardisierte Außenabmaße aufweisen, so dass die Dämpfereinheit als separates Bauteil anstelle von standardmäßig eingesetzten Dämpfereinheiten zum Beispiel an einer Führungseinheit wie einem Vollauszug, einem Teilauszug oder einem Scharnier insbesondere austauschbar anbringbar ist.

Auch vorteilhaft ist, dass in dem Gehäuse ein Kolbenelement verschieblich untergebracht ist. Die Kolbenmittel umfassen bevorzugt das Kolbenelement, das beispielsweise als Rundscheibe oder als außen zylindrisches Element ausgestaltet sein kann.

Weiter wird vorgeschlagen, dass vorteilhafterweise das Kolbenelement eine zentrisch zur Gehäuseachse ausgebildete Verlängerung aufweist. Über eine an den Kolbenmitteln angreifende Kolbenstange, die mit dem bewegbaren Möbelteil direkt oder indirekt koppelbar ist, kann die Bewegungskopplung der Kolbenmittel mit dem zu dämpfenden Möbelteil erfolgen.

Die Erfindung betrifft außerdem Führungsmittel für einen Möbelausschub mit einer an einem Korpus befestigbaren Korpusschiene und einer an dem Möbelausschub anbringbaren Bewegungsschiene. Nicht ausgeschlossen ist das Vorhandensein einer Mittelschiene, so dass ein Vollauszug mit drei zueinander teleskopierbaren bzw. verschieblichen Schienen bereitgestellt ist. Die Führungsmittel zeichnen sich dadurch aus, dass eine Vorrichtung gemäß einer der oben genannten Ausbildungen vorgesehen ist. auch Führungsmittel für eine Möbeltüre oder Möbelklappe wie ein Scharnier mit einer Dämpfereinheit für die Tür- oder Klappenbewegung sind von der Erfindung umfasst.

Damit lassen sich Führungsmittel mit den oben genannten Vorteilen realisieren. Werden zwei Führungsmittel zur Führung des betreffenden Möbelteils verwendet, kann genau eine Führungseinheit oder können beide Führungseinheiten mit einer Dämpfvorrichtung versehen sein.

### Figurenbeschreibung

Weitere Merkmale und Vorteile der Erfindung sind in den Figuren anhand verschiedener erfindungsgemäßer Ausführungsbeispiele näher erläutert. Im Einzelnen zeigt:
- Figur 1: einen Längsschnitt durch ein schematisiertes Gehäuseteil einer nicht erfindungsgemäßen Dämpfvorrichtung,
- Figur 2: einen Längsschnitt durch ein weiteres Gehäuseteil einer erfindungsgemäßen Dämpfvorrichtung,
- Figur 3: einen Längsschnitt durch ein Gehäuseteil einer weiteren alternativen nicht erfindungsgemäßen Dämpfvorrichtung,
- Figur 4: einen Längsschnitt durch eine nicht erfindungsgemäße schematisch gezeigte Dämpfvorrichtung,
- Figur 5: eine perspektivische Ansicht schräg von oben auf eine in Längsrichtung geschnittene Führungseinheit mit einer erfindungsgemäßen Dämpfvorrichtung für eine verschiebliche Führung eines an einem Möbelkorpus aufgenommenem Möbelteils,
- Figur 6: die Anordnung gemäß Figur 5 in Seitenansicht,
- Figur 7: ein vergrößertes Detail aus Figur 5,
- Figur 8: das Detail gemäß Figur 7 in Seitenansicht,
- Figur 9: ein Diagramm mit idealisierten Kurvenverläufen zur Darstellung der Dämpfwirkung einer bekannten Dämpfvorrichtung und einer erfindungsgemäßen Dämpfvorrichtung und
- Figur 10: einen Längsschnitt durch ein schematisiertes Gehäuseteil einer weiteren erfindungsgemäßen Dämpfvorrichtung.

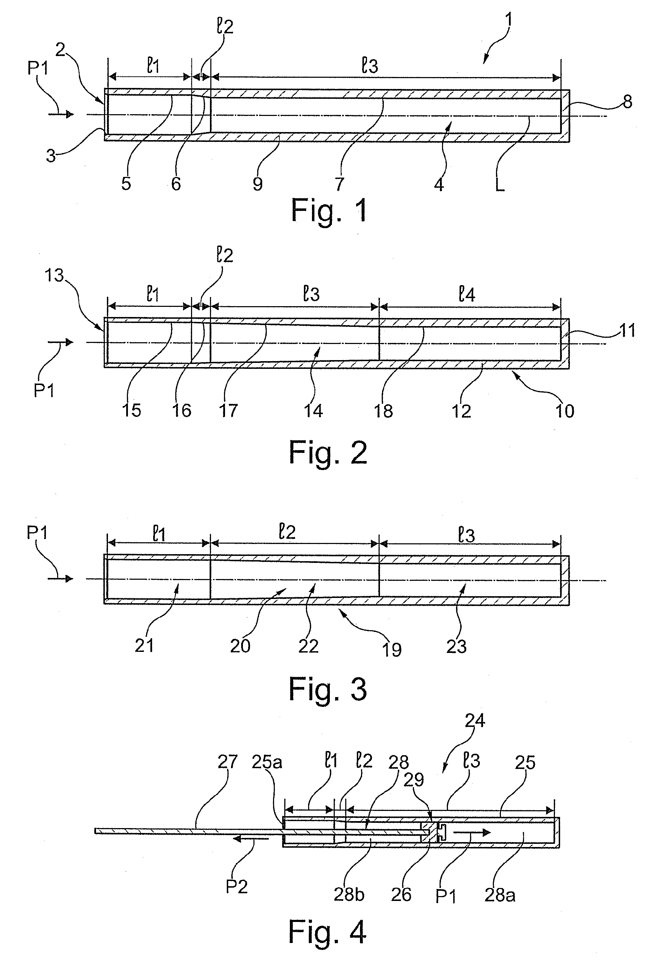

Figur 1 zeigt einen schematisierten hohlen Grundkörper 1 eines Gehäuses einer als Fluid-Dämpfer ausgebildeten nicht erfindungsgemäßen Dämpfvorrichtung. Der Grundkörper 1 umfasst einen sich in Längsrichtung zur Längsachse L des Grundkörpers 1 erstreckenden außen beispielsweise zylindrischen Hülsenabschnitt 9, der an einem hinteren Ende mit einem Boden 8 verschlossen ist. Der Grundkörper 1 ist auf der dem Boden 8 gegenüberliegenden Stirnseite über eine runde Gehäuseöffnung 2 offen, welche im Nutzzustand mit einem nicht dargestellten Verschlussdeckel bis auf einen Durchlass für eine Kolbenstange verschlossen ist, was anhand von Figur 4 weiter unten erläutert ist.

Zur Aufnahme des Verschlussdeckels ist am vorderen Ende des Hülsenabschnitts 9 eine die Gehäuseöffnung 2 umfänglich umschließende schräg nach außen sich erweiternden Fase 3 ausgebildet.

Das vom Grundkörper 1 umschlossene Hohl- bzw. Innenvolumen bildet einen langgestreckten Verschieberaum 4 für in Figur 1 nicht gezeigte Kolbenmittel des Fluid-Dämpfers, wobei im Verschieberaum 4 ein Dämpffluid unterbringbar ist. Das Dämpffluid kann eine Gas oder eine Flüssigkeit sein.

Der Verschieberaum 4 wird über seine Länge entlang der Längsachse L von der Innenseite bzw. einer Innenwandung des Hülsenabschnitts 9 umschlossen. Bei erfindungsgemäßen Dämpfvorrichtungen teilt sich die Innenwandung des Inneren des Gehäuses bzw. des Verschieberaums in unterschiedliche Abschnitte mit zumindest teilweise sich verjüngender Form bezogen auf eine Einschubrichtung P1 der Kolbenmittel, in welche sich die Kolbenmittel bei einem Dämpfvorgang bewegen. Bei bekannten Dämpfvorrichtungen sind die von den Kolbenmitteln überstrichenen Abschnitte durchgehend hohlzylindrisch.

Gemäß Figur 1 weist der Verschieberaum 4 in Einschubrichtung P1 vom vorderen mit der Gehäuseöffnung versehenen Ende einen über die Länge 11 sich erstreckenden ersten Innenwandungsabschnitt 5 auf, der hohlzylindrisch mit einem gleichbleibenden Innendurchmesser ausgebildet ist.

Daran schließt sich ein Innenwandungsabschnitt 6 an, welcher kegelstumpfförmig bzw. konisch ausgebildet ist, mit einer vergleichsweise geringen Länge 12, auf den bis zum Boden 8 des Verschieberaums 4 ein dritter Innenwandungsabschnitt 7 folgt, der wieder hohlzylindrisch ist.

Ein weiterer Grundkörper 10 eines Gehäuses eines erfindungsgemäßen Fluiddämpfers zeigt Figur 2, wobei der Grundkörper 10 einen Boden 11 und einen Hülsenabschnitt 12 mit einer Gehäuseöffnung 13 aufweist. Ein Verschieberaum 14 des Grundkörpers 10 unterteilt sich in vier unterschiedliche Abschnitte mit in Einschubrichtung P1 der Kolbenmittel einem ersten bzw. vorderen innen hohlzylindrischen Innenwandungsabschnitt 15 der Länge 11, einen zweiten Innenwandungsabschnitt 16 und einem dritten Innenwandungsabschnitt 17, die sich jeweils konisch verjüngen, und einem vierten Innenwandungsabschnitt 18, der sich ebenfalls aber mit geringerem Maß als der Innenwandungsabschnitt 17 konisch bis zum Boden 11 verjüngt.

Figur 3 zeigt einen Grundkörper 19 eines Gehäuses eines weiteren nicht erfindungsgemäßen Fluid-Dämpfers, wobei sich ein vom Grundkörper 19 umgebener Verschieberaum 20 in drei unterschiedlich ausgebildete Innenwandungsabschnitte 21, 22 und 23 unterteilt. In Einschubrichtung für nicht dargestellte Kolbenmittel folgt auf den vordersten hohlzylindrischen Innenwandungsabschnitt 21 mit der Länge 11 ein mittlerer Innenwandungsabschnitt 22 der Länge 12, welcher kegelstumpfförmig ist, an den sich ein wiederum hohlzylindrischer Innenwandungsabschnitt 23 mit der Länge 13 anschließt.

Figur 4 zeigt stark schematisiert einen nicht erfindungsgemäßen Fluid-Dämpfer 24, welcher einen Grundkörper 25 eines Gehäuses umfasst, der im Wesentlichen dem Grundkörper 1 entspricht und der einen Verschieberaum 28 umschließt für einen in Einschubrichtung P1 und entgegengesetzt in Richtung P2 hin- und herverschieblichen Kolben 26 mit einer daran fest vorhandenen Kolbenstange 27. Der Verschieberaum 28 ist mit einem Fluid wie z. B. Öl oder Luft gefüllt. Die Kolbenstange 27 greift zentrisch am Kolben 26 an und reicht durch einen abgedichteten Durchlass eines Verschlussdeckels 25a am vorderen Ende des Grundkörpers 25 nach außen.

Der außen zylindrische Kolben 26 ist umfänglich über einen nicht erkennbaren Ringspalt 29 von den Innenwandungsabschnitten des Grundkörpers 25 geringfügig beabstandet, so dass bei einem Dämpfvorgang beim Verschieben des Kolbens 26 in Einschubrichtung P1 das Fluid über den Ringspalt 29 von einem vorderen Teilvolumen 28a in ein hinteres Teilvolumen 28b strömt bzw. zwangsweise verdrängt wird, wobei durch den begrenzten Durchflussstrom des Fluids eine Dämpfkraft der Bewegung des Kolbens 26 entgegenwirkt und damit die Bewegung des zu dämpfenden Möbelteils gedämpft bzw. abgebremst wird. Da die Dämpfkraft von der Größe der Fläche des Ringspalts 29 abhängt, quer zur Längsachse L betrachtet, wirken entsprechend der in Grundkörper-Längsrichtung unterschiedlichen Durchmesser der Innenwandungsabschnitte unterschiedliche Dämpfkräfte gegen die Kolbenbewegung je nachdem, an welcher Position sich der Kolben 26 entlang der Längsachse L befindet. Da der Grundkörper 25 entsprechend des Grundkörpers 1 aufgebaut ist, unterteilt sich der Grundkörper 25 in drei Innendurchmesser-Bereiche mit von vorne nach hinten einem hohlzylindrischen Bereich der Länge 11, einen kegelstumpfförmigen der Länge 12 und einen wiederum hohlzylindrischen Bereich der Länge 13.

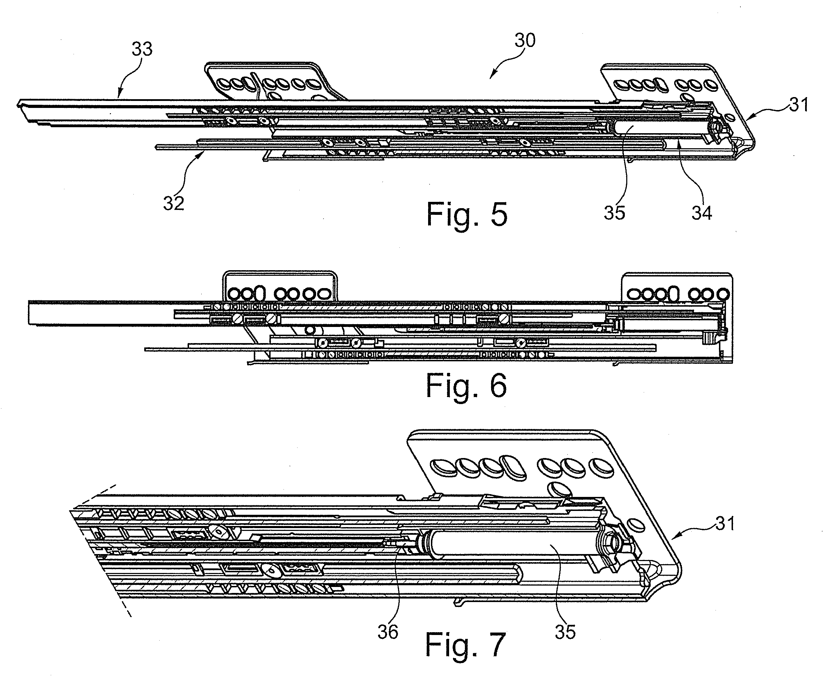

Die Figuren 5 bis 8 stellen perspektivisch im komplett eingeschobenen Zustand einen geschnitten dargestellten Vollauszug 30 dar z. B. zur beweglichen Führung einer Schublade an einem Möbelkorpus, wobei die Schublade über zwei entsprechende Vollauszüge zur verschieblichen Anbindung der Schublade an gegenüberliegenden Innenseiten von Seitenwänden des Möbelkorpus angebracht ist. Der Vollauszug 30 weist drei teleskopierbare Schienen umfassend eine fest am Möbelkorpus anbringbare Korpusschiene 31, eine Mittelschiene 32 und eine Bewegungsschiene 33 auf.

Im hinteren Bereich des Vollauszugs 30 ist ein dem Fluid-Dämpfer 24 gemäß Figur 4 aufgebauter nicht erfindungsgemäßer Fluid-Dämpfer 34 fest positioniert vorhanden, der ein Gehäuse 35 und darin verschiebliche Kolbenmitteln mit einer Kolbenstange 36 umfasst. Die Position und die Anbindung des Fluid-Dämpfers 34 entspricht der von bekannten Fluid-Dämpfern an Vollauszügen und ist daher nicht näher erklärt.

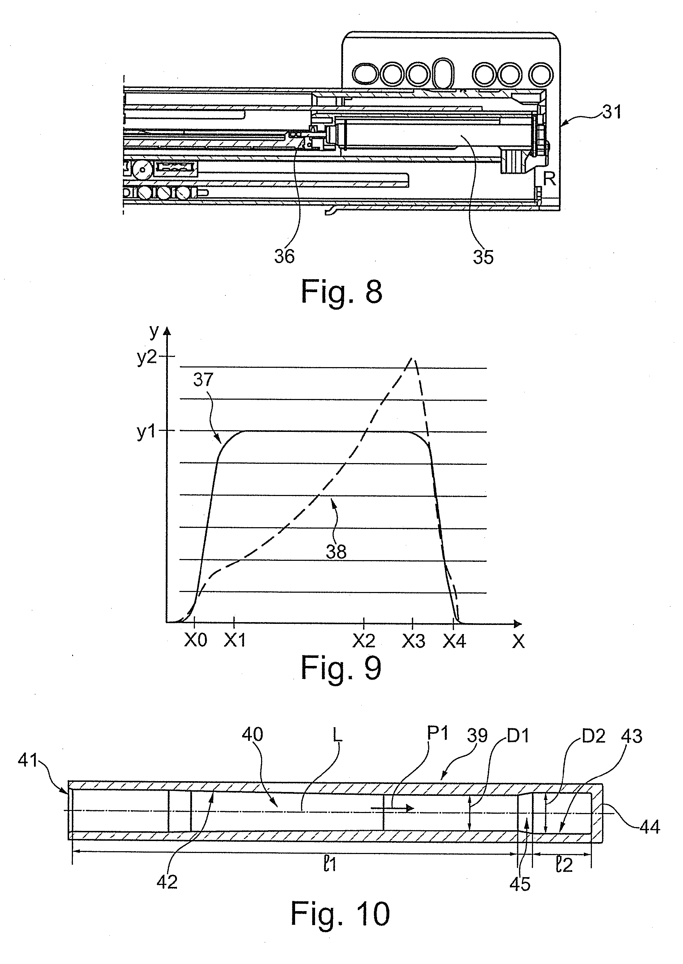

Figur 9 zeigt ein Weg-Kraft-Diagramm mit einer auf eine Kolbenmittelbewegung bezogene Wegachse x und einer Kraftachse y betreffend eine von einem Fluid-Dämpfer bereitstellbare Dämpfkraft. Die durchgezogene Kurve 37 zeigt stark schematisch den Weg-Kraft-Verlauf eines bekannten Fluid-Dämpfers mit einem Gehäuse, das innen durchgehend eine hohlzylindrische Form einer Innenwandung aufweist. Die Dämpfung findet neben einer jeweils vergleichsweise sehr kurze Ein- und Auslaufstrecke über den Verschiebeweg der Kolbenmittel zwischen x0 und x4 statt. Gemäß der Kurve 37 ist bei dem bekannten Fluid-Dämpfer abgesehen von einem steilen Anstieg zu Beginn und einem steilem Abfall am Ende ein gleichbleibender Kraftwert y1 über einen wesentlichen Weg zwischen x1 und x3 zu beobachten. Bei unterschiedlichen zu dämpfenden Massen bzw. Beladungen des zu dämpfenden Möbelteils sind daher stark unterschiedliche Schließzeiten zu beobachten.

Die weitere gestrichelte Kurve 38 zeigt ebenfalls schematisiert bei gleichen Arbeitsbedingungen, die der Kurve 37 zugrundeliegen, nach einem kurzen linear ansteigenden Verlauf, den über nahezu die gesamte Strecke x1 bis x3 angenähert expotentiell ansteigenden Weg-Kraft-Verlauf eines erfindungsgemäßen Fluid-Dämpfers mit einem Gehäuse, das innen zumindest abschnittsweise eine sich in Dämpf- bzw. Einschubrichtung von Kolbenmitteln sich verjüngende Form von Innenwandungsabschnitten z. B. gemäß des Fluid-Dämpfers gemäß Figur 4 aufweist. Demnach bleibt der Kraftverlauf gemäß Kurve 38 über einen wesentlichen Weg x0 bis x2 unter dem Kraftverlauf des bekannten Fluid-Dämpfers. Im letzten Wegabschnitt des Dämpfvorgangs steigt der Kraftwert des erfindungsgemäßen Fluid-Dämpfers aber vorteilhaft stark bzw. steil über den Wert y1 an bis auf den Maximalwert y2 bei x3 kurz vor Erreichen des Endes des Dämpfweges bei x4, wobei der Maximalwert y2 über ein Drittel über dem Maximalwert y1 gemäß der Kurve 37 liegt. Bei bis auf die Form der Innenwandungsabschnitte vergleichbarem Aufbau des erfindungsgemäßen Fluid-Dämpfers gegenüber bekannten Fluid-Dämpfern bleiben mit dem erfindungsgemäßen Fluid-Dämpfer vorteilhaft Schließzeiten des zu dämpfenden Möbelteils unabhängig von der Masse bzw. Beladung nahezu gleich.

Einen Grundkörper 39 eines Gehäuses eines weiteren alternativen erfindungsgemäßen Fluid-Dämpfers veranschaulicht Figur 10. Dabei weist ein vom Grundkörper 39 umschlossener Verschieberaum 40 bzw. dessen Wandungen in Längsrichtung im Wesentlichen zwei Teilbereiche auf. Der Verschiebraum 40 unterteilt sich in einen an einer Gehäuseöffnung 41 beginnenden kegelstumpfförmigen bzw. in Schnittansicht konisch sich in Richtung P1 gleichmäßig verengenden vorderen Innenwandungsabschnitt 42 der Länge 11 und einen hinteren hohlzylindrischen Innenwandungsabschnitt 43 der Länge 12, der sich bis zu einem Boden 44 des Grundkörpers 39 erstreckt. Zwischen dem Innenwandungsabschnitt 42 und dem Innenwandungsabschnitt 43 ist ein in Längsrichtung zur Längsachse L vergleichsweise kurzer Übergangsbereich 45 ausgestaltet, der sich nach hinten in Richtung des Bodens 44 aufweitet bis zum Durchmesser D2 des Innenwandungsabschnitts 43. Die Länge 12 ist deutlich geringer als die Länge 11. Der Innenwandungsabschnitt 43 trägt nicht zur Dämpfwirkung bei, sondern dient als Freilauf für im Verschieberaum 40 verschiebliche Kolbenmittel des Fluid-Dämpfers. Der Innendurchmesser D2 ist maßgeblich größer als ein Innendurchmesser D1 des Innenwandungsabschnitt 42 in einem durchmessergeringsten Bereich vor dem Übergangsbereich 45.

Die nicht dargestellten Kolbenmittel verschieben sich im Dämpfbetrieb am Ende eines Schließvorgangs des betreffenden Möbelteils bis in den Bereich des Innenwandungsabschnitts 43, wobei beim Dämpfvorgang bzw. beim Einschieben in Richtung P1 den Kolbenmitteln mit dem Verlassen des Innenwandungsabschnitts 42 bzw. mit dem Erreichen des Innenwandungsabschnitts 43 ein Freilauf im Verschieberaum 40 bereitgestellt wird. Denn im Innenwandungsabschnitt 43 ist ein freier Strömungsquerschnitt eines Spaltbereichs zwischen radial äußeren Randabschnitten der Kolbenmittel und den Wandungen des Innenwandungsabschnitts 43 vergleichsweise stark vergrößert gegenüber einem freien Strömungsquerschnitt eines entsprechenden Spaltbereichs beim Innenwandungsabschnitt 42. Damit wird ein Widerstand gegen die Kolbenmittelbewegung in Richtung P1 bzw. eine Dämpfwirkung auf der letzten Bewegungsstrecke des Möbelteils vor Erreichen einer Schließstellung relativ zu einem Möbelkorpus vermieden, da das im Verschieberaum 40 vorhandene Dämpffluid nahezu frei im Spaltbereich nach vorne in Richtung entgegen P1 strömen kann. Den Kolbenmitteln wird demgemäß auf der letzten Teilstrecke bei der Bewegung in Richtung P1 entlang des Innenwandungsabschnitts 43 nahezu kein Widerstand gegen die Einfahrbewegung entgegengesetzt, bis die Kolbenmittel mit einer Stirnseite eine Stillstand- bzw. Anschlagstellung am Boden 44 erreichen. Damit kann das zu dämpfende Möbelteil bzw. z. B. eine Schublade eine gewünschte Schließposition sicher erreichen, womit vorteilhafterweise Schließfehler durch nicht vollständig geschlossene Möbelteile bzw. Schubladen vermieden wird.

**Bezugszeichenliste:**

| | | | |
|---|---|---|---|
| 1 | Grundkörper | 39 | Grundkörper |
| 2 | Gehäuseöffnung | 40 | Verschieberaum |
| 3 | Fase | 41 | Gehäuseöffnung |
| 4 | Verschieberaum | 42 | Innenwandungsabschnitt |
| 5 | Innenwandungsabschnitt | 43 | Innenwandungsabschnitt |
| 6 | Innenwandungsabschnitt | 44 | Boden |
| 7 | Innenwandungsabschnitt | 45 | Übergangsbereich |
| 8 | Boden | | |
| 9 | Hülsenabschnitt | | |
| 10 | Grundkörper | | |
| 11 | Boden | | |
| 12 | Hülsenabschnitt | | |
| 13 | Gehäuseöffnung | | |
| 14 | Verschieberaum | | |
| 15, 16 | Innenwandungsabschnitt | | |
| 17, 18 | Innenwandungsabschnitt | | |
| 19 | Grundkörper | | |
| 20 | Verschieberaum | | |
| 21, 22 | Innenwandungsabschnitt | | |
| 23 | Innenwandungsabschnitt | | |
| 24 | Fluid-Dämpfer | | |
| 25 | Grundkörper | | |
| 25a | Verschlussdeckel | | |
| 26 | Kolben | | |
| 27 | Kolbenstange | | |
| 28 | Verschieberaum | | |
| 28a, 28b | Teilvolumen | | |
| 29 | Ringspalt | | |
| 30 | Vollauszug | | |
| 31 | Korpusschiene | | |
| 32 | Mittelschiene | | |
| 33 | Bewegungsschiene | | |
| 34 | Fluid-Dämpfer | | |
| 35 | Gehäuse | | |
| 36 | Kolbenstange | | |
| 37 | Kurve | | |
| 38 | Kurve | | |

## Patentansprüche

1. Vorrichtung zur Bewegungsdämpfung eines relativ zu einem Möbelkorpus bewegbaren Möbelteils, umfassend ein Gehäuse (1, 10, 19, 25, 35), das einen mit einem Fluid beaufschlagten Verschieberaum (4, 14, 20, 28) umschließt, in welchem mit dem Möbelteil koppelbare Kolbenmittel (26) verschieblich geführt sind, wobei die Bewegungsdämpfung des Möbelteils mit einer Verschiebebewegung der Kolbenmittel (26) in eine erste Schieberichtung relativ zum Gehäuse (1, 10, 19, 25, 35) erfolgt und dabei ein Teil des Fluids über einen Spaltbereich (29) zwischen den Kolbenmitteln (26) und Innenwandungsabschnitten (5-7, 15-18, 21-23) des Gehäuses (1, 10, 19, 25, 35) von einem ersten Teilvolumen (28a) des Verschieberaums (28) in ein zweites Teilvolumen (28b) des Verschieberaums (28) strömt, wobei die Aufteilung des Verschieberaums (28) in die beiden Teilvolumina durch die Verschiebeposition der Kolbenmittel (26) bestimmt ist, wobei in einem Bereich des Verschieberaums (4, 14, 20, 28), in welchem sich die Kolbenmittel (26) an den Innenwandungsabschnitten (5-7, 15-18, 21-23) des Gehäuses (1, 10, 19, 25, 35) vorbeibewegen, die Innenwandungsabschnitte (6, 16, 17, 22) derart ausgebildet sind, dass die vom Fluid durchströmbare Gesamtquerschnittsfläche des Spaltbereichs (29) zwischen den Innenwandungsabschnitten (6, 16, 17, 22) des Gehäuses (1, 10, 19, 25, 35) und den Kolbenmitteln (26) in einem betrachteten Querschnitt abhängig von der Verschiebeposition der Kolbenmittel (26) im Verschieberaum (4, 14, 20, 28) veränderlich ist, **dadurch gekennzeichnet, dass** in einem Bereich des Verschieberaums (4, 14, 20, 28), in welchem sich die Kolbenmittel (26) an den Innenwandungsabschnitten (6, 16, 17, 22) des Gehäuses (1, 10, 19, 25, 35) vorbeibewegen, die Innenwandungsabschnitte unterschiedliche Bereiche umfassen, die in Schieberichtung der Kolbenmittel unterschiedlich stark verjüngend ausgebildet sind.

2. Vorrichtung nach Anspruch 1, **dadurch gekennzeichnet, dass** in einem Bereich des Verschieberaums (4, 14, 20, 28), in welchem sich die Kolbenmittel (26) an den Innenwandungsabschnitten (6, 16, 17, 22) des Gehäuses (1, 10, 19, 25, 35) vorbeibewegen, die Innenwandungsabschnitte (6, 16, 17, 22) in die erste Schieberichtung sich gleichmäßig verjüngend ausgebildet sind.

3. Vorrichtung nach einem der vorhergehenden Ansprüche, **dadurch gekennzeichnet, dass** in einem Bereich des Verschieberaums (4, 14, 20, 28), in welchem sich die Kolbenmittel an den Innenwandungsabschnitten des Gehäuses (1, 10, 19, 25, 35) vorbeibewegen, die Innenwandungsabschnitte (6, 16, 17, 22) in die erste Schieberichtung im Wesentlichen schräg ausgerichtet ausgebildet sind.

4. Vorrichtung nach einem der vorhergehenden Ansprüche, **dadurch gekennzeichnet, dass** in einem Bereich des Verschieberaums (4, 14, 20, 28), in welchem sich die Kolbenmittel an den Innenwandungsabschnitten (6, 16, 17, 22) des Gehäuses (1, 10, 19, 25, 35) vorbeibewegen, die Innenwandungsabschnitte (6, 16, 17, 22) in die erste Schieberichtung der Kolbenmittel (26) im Wesentlichen konisch verjüngend ausgebildet sind.

5. Vorrichtung nach einem der vorhergehenden Ansprüche, **dadurch gekennzeichnet, dass** in einem Bereich des Verschieberaums (4, 14, 20, 28), in welchem sich die Kolbenmittel (26) an den Innenwandungsabschnitten (6, 16, 17, 22) des Gehäuses (1, 10, 19, 25, 35) vorbeibewegen, die Innenwandungsabschnitte (6, 16, 17, 22) in Schieberichtung der Kolbenmittel (26) vor und/oder nach den sich verjüngenden Innenwandungsabschnitten einen Bereich aufweisen, der in seiner Form unveränderlich ausgebildet ist.

6. Vorrichtung nach einem der vorhergehenden Ansprüche, **dadurch gekennzeichnet, dass** in einem ersten Bereich des Verschieberaums (40), in welchem sich die Kolbenmittel an den Innenwandungsabschnitten des Gehäuses vorbeibewegen, die Innenwandungsabschnitte (42) in die erste Schieberichtung der Kolbenmittel im Längsschnitt des Gehäuses im Wesentlichen konisch verjüngend ausgebildet sind, wobei sich in die erste Schieberichtung ein Endbereich (43) des Verschieberaums (40) anschließt, in welchem sich die Kolbenmittel vor Erreichen einer Endstellung entlangbewegen, wobei ein Innendurchmesser des Endbereichs (43) im Vergleich zum geringsten Innendurchmesser des ersten Bereichs (42) derart vergrößert ist, dass im Endbereich (43) nahezu keine relevante Dämpfwirkung auf die sich in die erste Schieberichtung verschiebenden Kolbenmittel wirkt.

7. Vorrichtung nach einem der vorhergehenden Ansprüche, **dadurch gekennzeichnet, dass** eine als ein Bauteil ausgebildete Dämpfereinheit (34) zur Bewegungsdämpfung der relativ zueinander bewegbaren Möbelteile vorhanden ist.

8. Vorrichtung nach einem der vorhergehenden Ansprüche, **dadurch gekennzeichnet, dass** in dem Gehäuse (1, 10, 19, 25, 35) ein Kolbenelement (26) verschieblich untergebracht ist.

9. Vorrichtung nach einem der vorhergehenden Ansprüche, **dadurch gekennzeichnet, dass** das Kolbenelement (26) eine zentrisch zur Gehäuselängsachse ausgebildete Verlängerung (27, 36) aufweist.

10. Führungsmittel (30) für einen Möbelausschub mit einer an einem Korpus befestigbaren Korpusschiene (31) und einer an dem Möbelausschub anbringbaren Bewegungsschiene (33), **dadurch gekennzeichnet, dass** eine Vorrichtung nach einem der vorhergehenden Ansprüche vorgesehen ist.

## Claims

1. Device for damping the movement of a movable furniture part relative to a main furniture body, comprising a housing (1, 10, 19, 25, 35) which surrounds a displacement space (4, 14, 20, 28) charged with a fluid, in which piston means (26) that can be coupled to the furniture part are guided displaceably, wherein the damping of the movement of the furniture part is performed by means of a displacement movement of the piston means (26) in a first sliding direction relative to the housing (1, 10, 19, 25, 35) and a portion of the fluid flows over a gap area (29) between the piston means (26) and inner wall sections (5-7, 15-18, 21-23) of the housing (1, 10, 19, 25, 35) from a first part volume (28a) of the displacement space (28) into a second part volume (28b) of the displacement space (28), wherein the division of the displacement space (28) into the two part volumes is determined by the displacement position of the piston means (26), wherein in an area of the displacement space (4, 14, 20, 28), in which the piston means (26) move past the inner wall sections (5-7, 15-18, 21-23) of the housing (1, 10, 19, 25, 35), the inner wall sections (6, 16, 17, 22) are designed such that the whole cross-sectional area of the gap area (29) that can be flowed through by fluid between the inner wall sections (6, 16, 17, 22) of the housing (1, 10, 19, 25, 35) and the piston means (26) in a relevant cross section can be varied depending on the displacement position of the piston means (26) in the displacement space (4, 14, 20, 28), **characterised in that** in an area of the displacement space (4, 14, 20, 28), in which the piston means (26) move past the inner wall sections (6, 16, 17, 22) of the housing (1, 10, 19, 25, 35), the inner wall sections have different sections which are designed to taper to varying degrees in the displacement direction of the piston means.

2. Device according to claim 1, **characterised in that** in a section of the displacement space (4, 14, 20, 28), in which the piston means (26) move past the inner wall sections (6, 16, 17,22) of the housing (1, 10, 19, 25, 35), the inner wall sections (6, 16, 17, 22) are designed to taper evenly in the first sliding direction.

3. Device according to any one of the preceding claims, **characterised in that** in a section of the displacement space (4, 14, 20, 28), in which the piston means move past the inner wall sections of the housing (1, 10, 19, 25, 35), the inner wall sections (6, 16, 17, 22) are aligned to be essentially oblique in the first sliding direction.

4. Device according to any one of the preceding claims, **characterised in that** in an area of the displacement space (4, 14, 20, 28), in which the piston means (26) move past the inner wall sections (6, 16, 17, 22) of the housing (1, 10, 19, 25, 35), the inner wall sections (6, 16, 17, 22) are designed essentially to taper conically in the first displacement direction of the piston means (26).

5. Device according to any one of the preceding claims, **characterised in that** in a section of the displacement space (4, 14, 20, 28), in which the piston means (26) move past the inner wall sections (6, 16, 17, 22) of the housing (1, 10, 19, 25, 35), the inner wall sections (6, 16, 17, 22) in sliding direction of the piston means (26) have a section before and/or after the tapering inner wall sections which is designed to have a shape that cannot be varied.

6. Device according to any one of the preceding claims, **characterised in that** in a first area of the displacement space (40), in which the piston means move past the inner wall sections of the housing, the inner wall sections (42) are designed to taper essentially conically in the first sliding direction of the piston means in the longitudinal cross section of the housing, wherein in the first sliding direction an end section (43) of the displacement space (40) follows, along which the piston means move prior to reaching an end position, wherein an inner diameter of the end section (43) is enlarged compared to the smallest inner diameter of the first section (42) such that in the end section (43) there is virtually no significant damping effect on the piston means moving in the first sliding direction.

7. Device according to any one of the preceding claims, **characterised in that** a damping unit (34) designed as a component is provided for damping the movement of the furniture parts that move relative to one another.

8. Device according to any one of the preceding claims, **characterised in that** in the housing (1, 10, 19, 25, 35) a piston element (26) is accommodated displaceably.

9. Device according to any one of the preceding claims **characterised in that** the piston element (26) has an extension (27, 36) designed to be central to the housing longitudinal axis.

10. Guiding means (30) for an extending furniture part comprising a runner (31) which can be secured to a body and a rail (33) attachable to the extending furniture part, **characterised in that** a device is provided according to any one of the preceding claims.

## Revendications

1. Dispositif destiné à amortir le mouvement d'un élément de meuble mobile par rapport à un corps de meuble, comprenant un boîtier (1, 10, 19, 25, 35) qui entoure un espace de déplacement (4, 14, 20, 28) contenant un fluide, espace dans lequel sont guidés mobiles des moyens formant piston (26) pouvant être accouplés à l'élément de meuble, l'amortissement du mouvement de l'élément de meuble étant provoqué par un déplacement des moyens formant piston (26) dans un premier sens de déplacement par rapport au boîtier (1, 10, 19, 25, 35), et, de ce fait, une partie du fluide s'écoulant par une zone de fente (29) située entre les moyens formant piston (26) et des sections de paroi intérieure (5-7, 15-18, 21-23) du boîtier (1, 10, 19, 25, 35) d'un premier volume partiel (28a) de l'espace de déplacement (28) dans un deuxième volume partiel (28b) de l'espace de déplacement (28), la division de l'espace de déplacement (28) en lesdits deux volumes partiels étant définie par la position de déplacement des moyens formant piston (26), les sections de paroi intérieure (6, 16, 17, 22), dans une zone de l'espace de déplacement (4, 14, 20, 28) dans laquelle les moyens formant piston (26) se déplacent devant les sections de paroi intérieure (5-7, 15-18, 21-23) du boîtier (1, 10, 19, 25, 35), étant conçues de telle sorte que la surface totale de la section transversale de la zone de fente (29) pouvant être traversée par le fluide et située entre les sections de paroi intérieure (6, 16, 17, 22) du boîtier (1, 10, 19, 25, 35) et les moyens formant piston (26) peut varier dans une section transversale observée en fonction de la position de déplacement des moyens formant piston (26) dans l'espace de déplacement (4, 14, 20, 28), **caractérisé en ce que** dans une zone de l'espace de déplacement (4, 14, 20, 28) dans laquelle les moyens formant piston (26) se déplacent devant les sections de paroi intérieure (6, 16, 17, 22) du boîtier (1, 10, 19, 25, 35), les sections de paroi intérieure comprennent différentes zones qui se rétrécissent avec des intensités différentes dans le sens de déplacement des moyens formant piston.

2. Dispositif selon la revendication 1, **caractérisé en ce que** dans une zone de l'espace de déplacement (4, 14, 20, 28) dans laquelle les moyens formant piston (26) se déplacent devant les sections de paroi intérieure (6, 16, 17, 22) du boîtier (1, 10, 19, 25, 35), les sections de paroi intérieure (6, 16, 17, 22) sont conçues de manière à se rétrécir régulièrement dans le premier sens de déplacement.

3. Dispositif selon l'une des revendications précédentes, **caractérisé en ce que** dans une zone de l'espace de déplacement (4, 14, 20, 28) dans laquelle les moyens formant piston se déplacent devant les sections de paroi intérieure du boîtier (1, 10, 19, 25, 35), les sections de paroi intérieure (6, 16, 17, 22) sont conçues en étant orientées de manière sensiblement oblique dans le premier sens de déplacement.

4. Dispositif selon l'une des revendications précédentes, **caractérisé en ce que** dans une zone de l'espace de déplacement (4, 14, 20, 28) dans laquelle les moyens formant piston se déplacent devant les sections de paroi intérieure (6, 16, 17, 22) du boîtier (1, 10, 19, 25, 35), les sections de paroi intérieure (6, 16, 17, 22) sont conçues de manière à se rétrécir de manière sensiblement conique dans le premier sens de déplacement des moyens formant piston (26).

5. Dispositif selon l'une des revendications précédentes, **caractérisé en ce que** dans une zone de l'espace de déplacement (4, 14, 20, 28), dans laquelle les moyens formant piston (26) se déplacent devant les sections de paroi intérieure (6, 16, 17, 22) du boîtier (1, 10, 19, 25, 35), les sections de paroi intérieure (6, 16, 17, 22) comprennent, dans le sens de déplacement des moyens formant piston (26), devant et/ou derrière les sections de paroi intérieure se rétrécissant, une zone dont la forme est invariable.

6. Dispositif selon l'une des revendications précédentes, **caractérisé en ce que** dans une première zone de l'espace de déplacement (40) dans laquelle les moyens formant piston se déplacent devant les sections de paroi intérieure du boîtier, les sections de paroi intérieure (42) sont conçues, en coupe longitudinale du boîtier, de sorte à se rétrécir de manière sensiblement conique dans le premier sens de déplacement des moyens formant piston, une zone d'extrémité (43) de l'espace de déplacement (40), dans laquelle les moyens formant piston se déplacent avant d'atteindre une position finale, faisant suite dans le premier sens de déplacement, un diamètre intérieur de la zone d'extrémité (43) étant augmenté en comparaison du plus petit diamètre intérieur de la première zone (42), de telle manière que dans la zone d'extrémité (43), quasiment aucun effet amortissant notable n'est exercé sur les moyens formant piston se déplaçant dans le premier sens de déplacement.

7. Dispositif selon l'une des revendications précédentes, **caractérisé en ce qu'**une unité d'amortissement (34) réalisée sous la forme d'un composant est prévue pour amortir le mouvement des éléments de meuble mobiles les uns par rapport aux autres.

8. Dispositif selon l'une des revendications précédentes, **caractérisé en ce qu'**un élément formant piston (26) est logé mobile dans le boîtier (1, 10, 19, 25, 35).

9. Dispositif selon l'une des revendications précédentes, **caractérisé en ce que** l'élément formant piston (26) comprend un prolongement (27, 36) réalisé de manière centrale par rapport à l'axe longitudinal du boîtier.

10. Moyens de guidage (30) pour un élément de sortie de meuble comprenant un rail (31) pouvant être fixé sur un corps et un rail de déplacement (33) pouvant être monté sur l'élément de sortie de meuble, **caractérisés en ce qu'**il est prévu un dispositif selon l'une des revendications précédentes.
